# EUROPEAN PATENT SPECIFICATION

(11) **EP 1 639 876 B1**
(45) Date of publication and mention of the grant of the patent: **04.06.2008**
(21) Application number: 05020774.5
(22) Date of filing: 23.09.2005
(51) Int. Cl.: A01B 29/04

(54) **Bar cage packer roller with a scraper plate**
Stabwalze mit einer Rakelplatte
Rouleaux de compactage avec une plaque à racler

(30) Priority: 24.09.2004 DK 200401461
(43) Date of publication of application: 29.03.2006
(73) Proprietor: Kaastrup, Søren, 7870 Roslev (DK)
(72) Inventor: Kaastrup, Søren, 7870 Roslev (DK)
(74) Representative: Nielsen, Leif

(56) References cited:
- EP-A- 0 305 601
- WO-A-00/78121
- DE-U1- 8 512 300
- FR-A- 2 586 887
- FR-A- 2 804 575

## Description

### Field of the Invention

The present invention relates to a tube compacting roller with through-going fixed axle wherein at least one scraper plate is mounted on the through-going fixed axle, the scraper plate having an outer side edge disposed in immediate vicinity of the rods of the tube compacting roller.

### Background of the Invention

In order to get optimal yield of the crops, the farmers want to work their fields as few times as possible each year, but still achieving a smooth uniform field after working it. This has caused the implement producers to develop various types of combination farming machines where it is possible to perform more than one kind of soil treatment at a time. Different combinations are provided, as e.g. harrow/roller, harrow/harrow, harrow/sowing machine, and plough/compacter.

In these combination machines there is often integrated a tube compacting roller crushing lumps of soil and evening the soil. It may be disposed in front of or behind another machine arrangement. From the US patent publications 4,006,781 and 3,910,356 and from the websites of the producers of agricultural implements on the Internet, as e.g. Kongskilde, Fiona and Kuhn, various types of agricultural vehicles are known where a tube compacting roller is integrated.

On the Internet, among the machines from Fiona, Kuhn and Kongskilde, appears a tube compacting roller which is mounted as an aftertreating arrangement after a sowing machine or a harrow. The rods of the tube compacting roller are mounted along the outer edge on circular discs or circular rings which are disposed with suitable spacing in the longitudinal direction of the tube compacting roller. In the two circular end members, bearings and fittings are mounted by which the tube compacting roller can be coupled to the towing vehicle.

It is also known from the above mentioned US patent publications that the rods of the tube compacter are mounted along the outer edge on the circular discs or rings which are disposed with suitable spacing along the tube compacting roller. Through these circular discs there is mounted a centrally located through-going axle. In the two end members of the axle, slide bearings and fittings are mounted by which the tube compacting roller may be coupled to the agricultural vehicle.

The rods on the tube compacting roller may be mounted so that they are all disposed in parallel with the longitudinal direction of the roller, or they may be disposed winding in longitudinal direction of the roller. This means that the fastening points of a rod on the circular discs or rings are displaced along the periphery in longitudinal direction of the tube compacting roller.

The number of rods on the tube compacting roller is determined by the use of the soil to be treated. For example, on a tube compacting roller placed in front of a sowing machine there is mounted more rods than on a tube compacting roller placed after a coarse stubble harrow, as finer and more uniform soil conditions are desired by sowing than by aftertreatment by a stubble harrow.

Common to all these types of tube compacting rollers is that the soils adheres to the rods of the tube compacting roller in humid weather or when the soil is moist and wet, which is a great disadvantage because lumps of soil may collect inside the soil compacting roller while driving. The lumps of soil gradually grow larger, and eventually they fill up the entire tube compacting roller. This causes bad surface treatment of the soil, and the soil lumps are not crushed. In order to avoid this, the farmer needs to interrupt the work regularly for cleaning the tube compacting roller with e.g. compressed air or a high-pressure washer.

Furthermore a tube compacting roller of the type mentioned by way of introduction is known from FR 2 586 887. In order to order to avoid accumulation of soil inside the soil compacting roller, a scraper plate is fitted on the through-going fixed axle.

### Object of the Invention

It is the purpose of the invention to provide a tube compacting roller which may be used on all types of soils, and which has simple construction and is easy to make.

### Description of the Invention

This is achieved by a tube compacting roller of the kind described in the preamble of claim 1, and where at least one of the end discs of the tube compacting roller in connection with a central opening is provided with a cutout having the shape as a cross-section of the scraper plate, which opening and cutout is adapted for passing through the through-goingaxle and scraper plate.

This entails that the scraper plate and the through-going axle may be assembled first and readily be inserted subsequent to assembling the tube compacting roller, which makes the manufacturing process of the tube compacting roller easier and quicker.

Furthermore, it is possible to retrofit a scraper plate on existing tube compacting rollers. The original axle is removed, and a central opening and/or cutout is formed in at least one end disc and in all circular discs that possibly are disposed in the longitudinal direction of the tube compacting roller, where after the axle with the scraper plate is inserted, pulled into position and fastened/fixed.

In the following, the term "module" is used for the distance between the circular discs or rings holding the rods of the tube compacting roller, and the term "rods" cover the tubes or sections used for crushing the soil and which are disposed along the edge of the circular discs.

In order to avoid accumulation of soil inside the soil compacting roller, a scraper plate is fitted on the through-going fixed axle as described in prior art.

On the through-going fixed axle circular discs are mounted with appropriate spacing, and at each end there is mounted a slide bearing and a fitting so that the tube compacting roller may be coupled to an agricultural vehicle. The scraper plate is mounted on the side of the through-going fixed axle which is opposite to the direction of driving, which means that lumps of soils which are flung against the plate or scraped off the rods will fall down through openings between the rods.

The scraper plate is disposed so that there is a gap between the inner side of the rods of the tube compacting roller and the outer side edge of the scraper plate facing away from the fixed axle. The gap may be chosen rather small, but for satisfactory function it is sufficient that the gap is less than the mutual spacing between the rods. Thereby it is ensured that loose and knocked-off soils falls out of the tube compacting roller. In an alternative embodiment, the gap may be varied in that the scraper plate is fastened on the axle with fittings so that it may be adjusted in radial direction of the tube compacting roller.

The scraper plate may be mounted, e.g. welded onto the axle, so that it is directed forwards or rearwards, respectively, relative to the direction of driving. Typically, the scraper plate will be fastened directed rearwards at an angle between 270° and 180°.

The cross-sectional shape of the scraper plate may have a rectangular shape, or a concave shape, or a convex shape, or an L-shape.

A bead may be welded on the edge of the scraper plate in order to increase wearability of the scraper plate. The bead is preferably welded on the side of the scraper plate that encounters the rods at first.

The scraper plate is adapted so that its length fits the length of the tube compacting roller modules so that it fits between each of the circular discs. This enables mounting the scraper plate at different angles in the various modules. For example, there may one angle on the scraper plate where the agricultural vehicle or the tractor has had the wheels and another angle on the scraper plate at the extreme reach of the agricultural vehicle.

The scraper plate may be formed of a material which e.g. may be usual steel, hardened steel, or a very hard plastic material. Typically, hardened steel will be used as this has greater resistance to wear.

In order to ensure that the scraper plate does not rotate with the tube compacting roller, the through-going axle is connected and fixed to at least one of the end discs of the tube compacting roller with at least one fitting including securing means and fixing means. Where the fitting is designed with a member, preferably a U-shaped section, which may interact with the part of the through-going axle extending out through the end disc. The securing means are used for securing the through-going axle to the fitting, and fixing means are used to prevent the through-going axle from rotating.

According to a preferred embodiment of the invention, both securing means and fixing means include a bolted assembly, where the bolted assembly in the securing means is designed so that a bolt is passed through holes in the fitting, whereby the through-going axle is secured in the fitting, while the bolted assembly in the fixing means is designed so that a bolt is passed through holes in the fitting and a hole transversely of the axle, whereby the through-going axle is fixed and prevented from rotating. By using bolted assemblies, there is provided the option that the tube compacting roller may readily be disassembled again. By using alternative securing means and fixing means, e.g. welding, it is not possible to disassemble the tube compacting roller again.

The invention is primarily provided as a tube compacting roller for agricultural vehicles, but may be expected applied to other areas, e.g. horticulture and gardening.

### Description of the drawing.

The invention will be explained in depth in the following with reference to the Figures, where:
- Fig. 1: shows a detail of one end of the tube compacting roller;
- Fig. 2: shows a side view of the one end of the tube compacting roller;
- Fig. 3: shows a cross-section of the tube compacting roller with a rearwards directed concave scraper plate which is disposed between 270-180 degrees;
- Fig. 4: shows a cross-section of the tube compacting roller with an orthogonal plane scraper plate which is disposed between 270-180 degrees;
- Fig. 5: shows a cross-section of the tube compacting roller with a forwards directed L-shaped scraper plate which is disposed between 270-180 degrees;
- Fig. 6: shows a cross-section of the tube compacting roller with a rearwards directed convex scraper plate which is disposed between 270-180 degrees;
- Fig. 7: shows a cross-section of the tube compacting roller with a rearwards directed L-shaped scraper plate which is disposed between 270-180 degrees;
- Fig. 8: shows a cross-section of the tube compacting roller with a forwards directed convex scraper plate which is disposed between 90-0 degrees;
- Fig. 9: shows a cross-section of the tube compacting roller with a forwards directed L-shaped scraper plate which is disposed between 90-0 degrees;
- Fig. 10: shows an end disc and a fitting for fixing and securing the through-going shaft.

### Detailed Description of the Invention

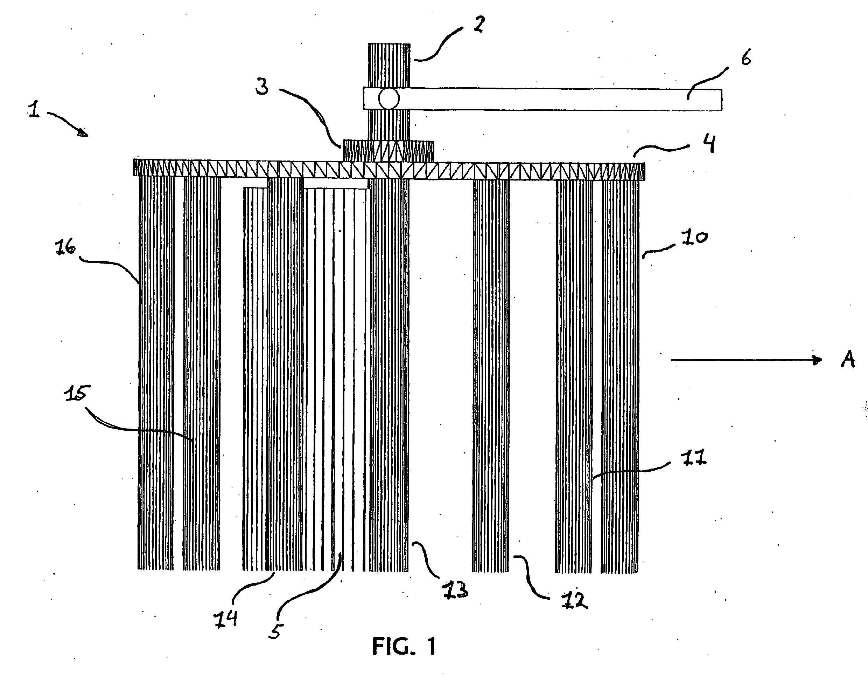

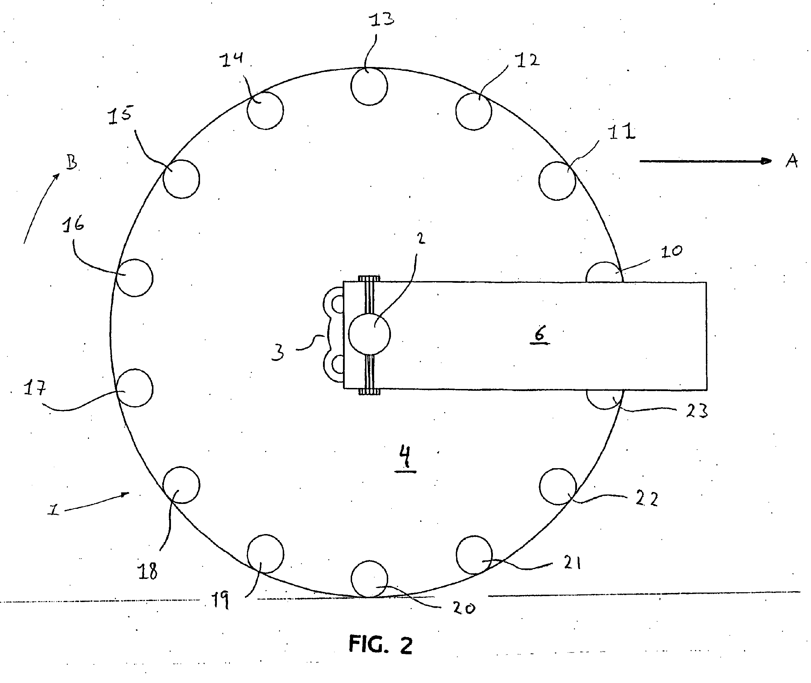

In the embodiment shown on Figs. 1 and 2, the tube compacting roller 1 is designed with a fixed through-going axle 2 which may be fastened on another machine arrangement by means of fittings 6. The circular end disc 4, on which a slide bearing 3 is mounted, is mounted on the through-going fixed axle 2 so that it is possible for the rods 10-23 and the circular end disc 4 to rotate about the axle 2 in direction of rotation B. On the circular disc 4, the rods 10-23 are fastened along the periphery. The scraper plate 5 is fastened to the through-going axle 2 at the opposite side of the direction of driving A, i.e. directed rearwards.

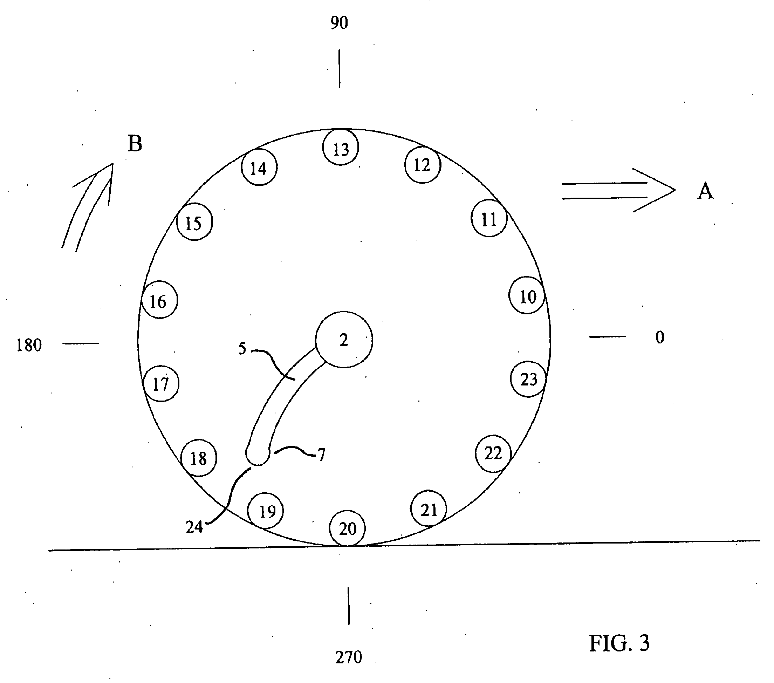

In the embodiment shown on Fig. 3, the scraper plate 5 is designed with concave shape and disposed rearwards directed. There is provided a bead 7 on the outer side edge 24 first encountering the rods 10-23 in the direction of rotation B. The gap between the scraper plate 5 and the rods 10-23 is dependent on which shape is chosen for the scraper plate 5, and how the scraper plate 5 is fastened to the fixed axle 2. The scraper plate 5 is disposed directed rearwards in order to knock the soil down into the tube compacting roller 1, whereby the soil can fall out of the tube compacting roller 1 through the spacing between the rods 10-23.

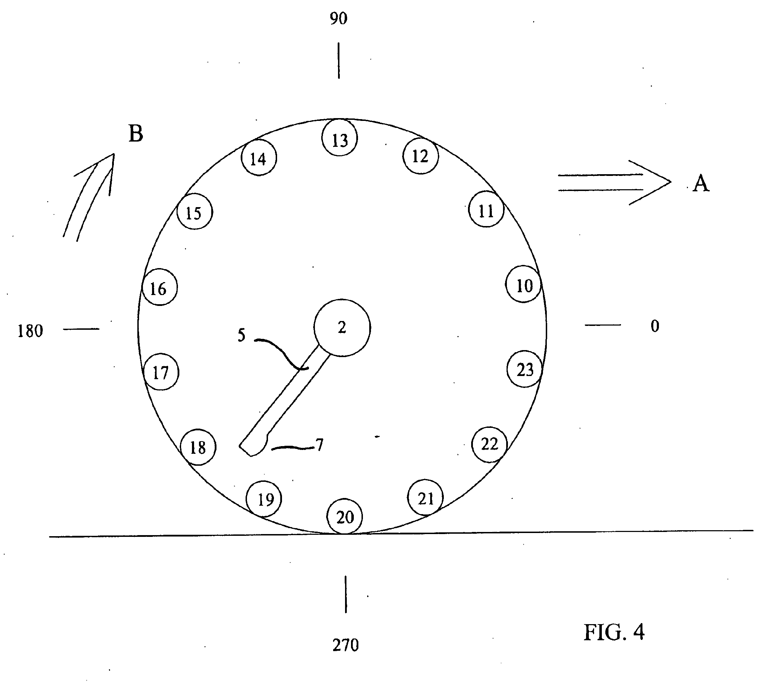

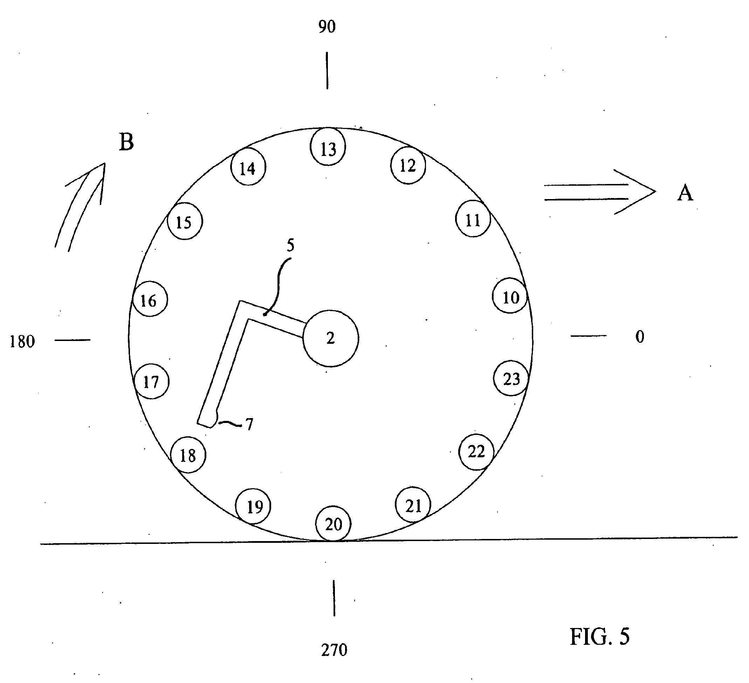

The scraper plate 5 is preferably designed concave and disposed rearwards directed as shown on Fig. 3. However, it may also be plane, i.e. largely orthogonal to the periphery as shown on Fig. 4, or designed as a rearwards directed L as shown on Fig. 5.

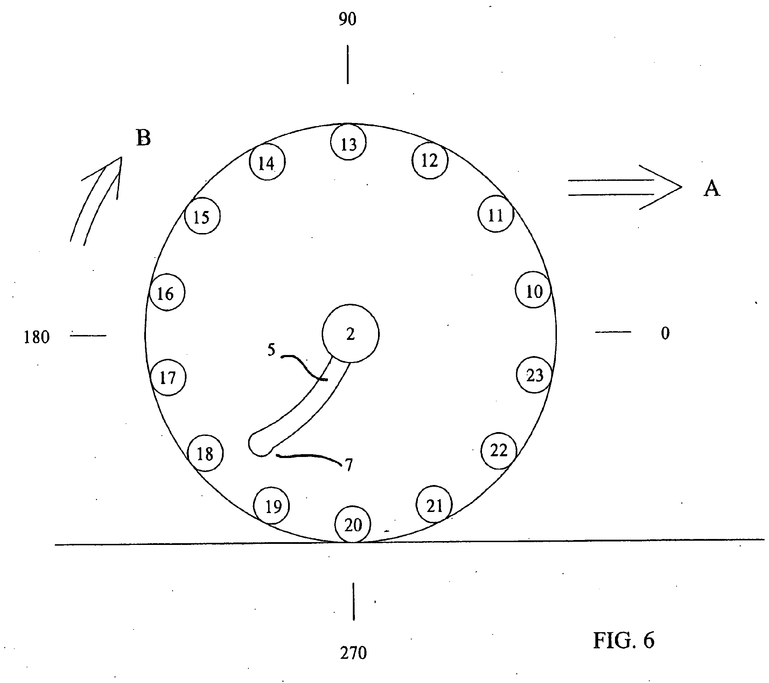

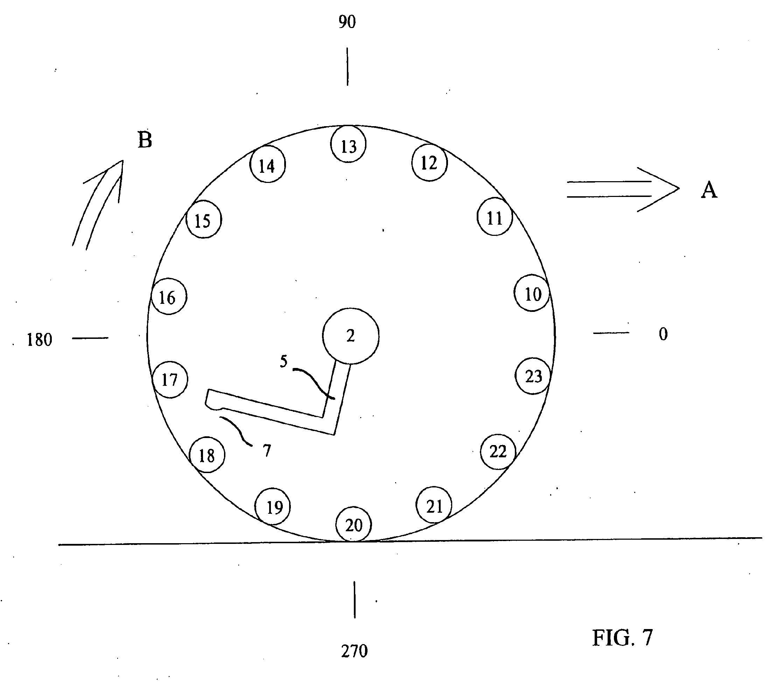

A further alternative is a convex rearwards directed shape, as shown on Fig. 6, where the scraper plate 5 presses the soil out through the rods 10-23 due to the convex shape. A similar effect is achieved with an L-shaped rearwards directed scraper plate 5, as shown in Fig. 7.

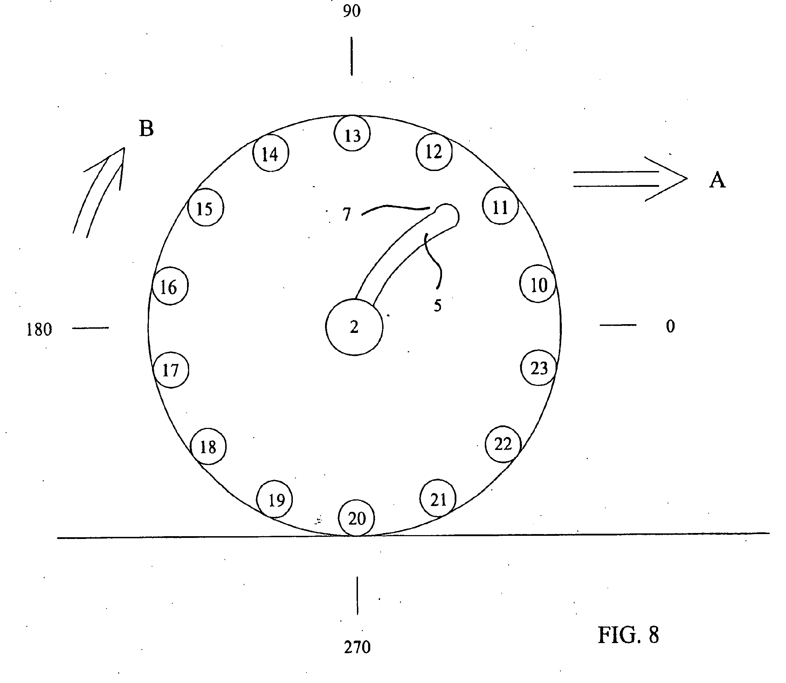

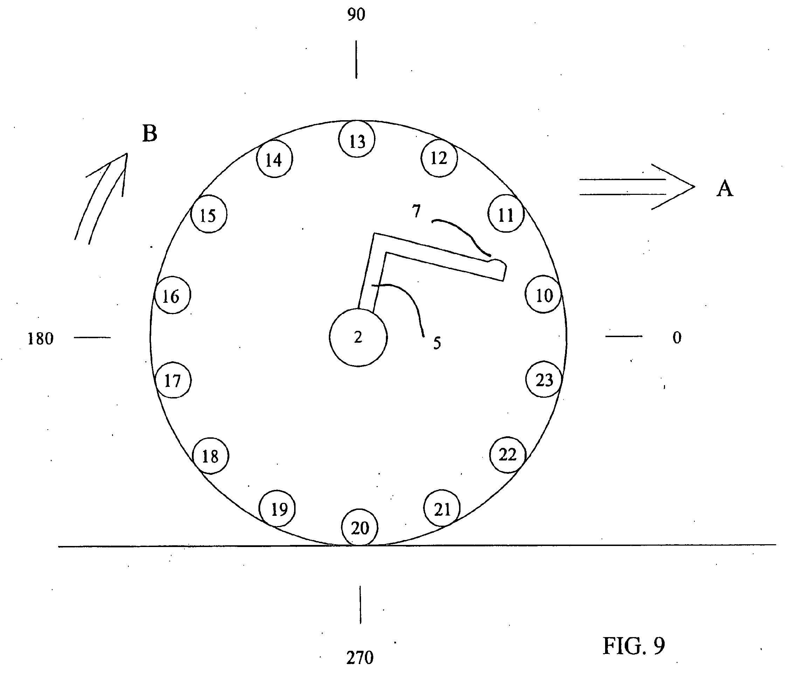

The convex shape, or the L-shape, is particularly suited for a tube compacting roller where the scraper plate 5 is directed forwards as shown on Figs. 8 and 9, respectively.

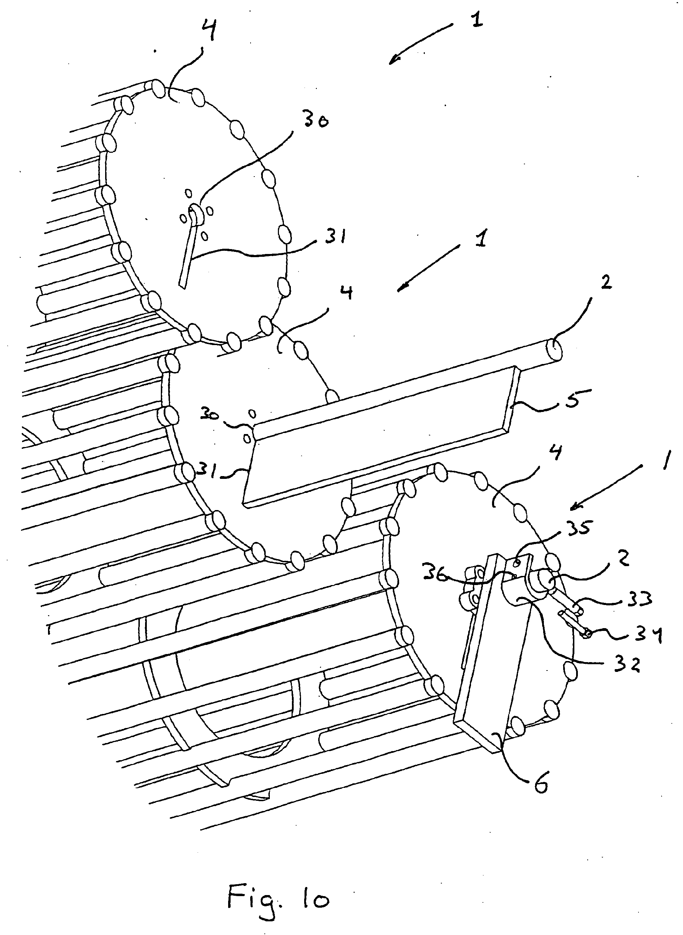

Fig. 10 shows three drawings of a tube compacting roller 1, where the upper drawing shows an end disc 4 designed with a central opening 30 and a cutout 31, where opening 30 and cutout 31 form a "keyhole" having the same shape as the cross-section of the through-going axle 2 and the scraper plate 5.

In the intermediate drawing, the axle 2 and the scraper plate 5 are about to be mounted in the tube compacting roller 1, by the axle 2 with the scraper plate 5 being pushed through the "keyhole" which is formed by opening 30 and cutout 31. Design of the "keyhole" depends on the cross-section of the axle 2 with the scraper plate 5.

The lower drawing shows how the axle 2 is secured and fixed in a fitting 6 including a U-section 32 which partly surrounds the axle 2, and where bolt 33 is disposed through the holes 35 and thereby secures the axle 2 in U-section 32, while bolt 34 is disposed through the holes 36 and a transverse hole (not shown) in the axle 2, and thereby fixes the axle 2 and prevents scraper plate 5 from rotating.

The invention is not limited to the embodiment shown in the Figures and described above. Other embodiments, e.g. combinations of the shown scraper plate shapes, and other materials, other fastening options and shapes of scraper plate are envisaged within the scope of the present invention.

## Claims

1. A tube compacting roller (1) with through-going fixed axle (2) wherein at least one scraper plate (5) is mounted on the through-going fixed axle, the scraper plate having an outer side edge (24) disposed in immediate vicinity of the rods (10-23) of the tube compacting roller, **characterised in that** at least one of the end discs (4) of the tube compacting roller in connection with a central opening (30) is provided with a cutout (31) having the shape as a cross-section of the scraper plate, which opening and cutout is adapted for passing through the through-going axle and scraper plate.

2. Tube compacting roller according to claim 1, **characterised in that** the cross-sectional shape of the scraper plate includes at least one from the group consisting of a plane shape, a concave shape, a convex shape, or an L-shape.

3. Tube compacting roller according to any of claims 1 -2, **characterised in that** the scraper plate is mounted directed rearwards in relation to the direction of driving.

4. Tube compacting roller according to any of claims 1 -3, **characterised in that** the tube compacting roller is composed of modules, and that the length of the scraper plate is adapted to the length of such a module.

5. Tube compacting roller according to any of claims 1 -4, **characterised in that** the scraper plate may be fastened on the through-going axle by a method which includes at least one from the group consisting of welding, bolting, or fittings.

6. Tube compacting roller according to any of claims 1 -5, **characterised in that** the scraper plate is made of a material that includes at least one from the group consisting of steel, hardened steel or a hard plastic material.

7. Tube compacting roller according to any one of claims 1 -6, **characterised in that** the through-going axle is connected and fixed to at least one of the end discs of the tube compacting roller with at least one fitting including securing means and fixing means.

8. Tube compacting roller according to claim 7, **characterised in that** both securing means and fixing means include a bolted assembly.

## Patentansprüche

1. Rohrpaketzylinder (1) mit einer durchgehenden, festen Achse (2), wobei wenigstens ein Streichblech (5) auf der durchgehenden festen Achse befestigt ist, wobei ein äusserer Seitenrand (24) des Streichbleches in unmittelbarer Nähe der Staben (10-23) des Rohrpaketzylinders vorgesehen ist, **dadurch gekennzeichnet, dass** wenigstens eine Stirnplatte (4) des Rohrpaketzylinders in Verbindung mit einer mittigen Öffnung (30) mit einem die Querschnittsform des Streichbleches aufweisenden Ausschnitt versehen ist, welche Öffnung und Ausschnitt der Durchführung der durchgehenden Achse und Streichblech angepasst sind.

2. Rohrpaketzylinder nach Anspruch 1, **dadurch gekennzeichnet, dass** die Querschnittsform des Streichbleches wenigstens eine von der Gruppe bestehend aus einer flächigen Form, einer konkaven Form, einer konveksen Form oder einer L-Form umfasst.

3. Rohrpaketzylinder nach einem der Ansprüche 1-2, **dadurch gekennzeichnet, dass** das Streichblech im Verhältnis zur Fahrtrichtung nach hinten gerichtet befestigt ist.

4. Rohrpaketzylinder nach einem der Ansprüche 1-3, **dadurch gekennzeichnet, dass** der Rohrpaketzylinder von Modulen zusammengesetzt ist, und dass die Länge des Streichbleches der Länge eines solchen Moduls angepasst ist.

5. Rohrpaketzylinder nach einem der Ansprüche 1-4, **dadurch gekennzeichnet, dass** das Streichblech auf der durchgehenden Achse befestigt werden kann und zwar mittels eines Verfahrens, das wenigstens ein von der Gruppe bestehend aus Schweissen, Verbolzung oder Anschlussstücke umfasst.

6. Rohrpaketzylinder nach einem der Ansprüche 1-5, **dadurch gekennzeichnet, dass** das Streichblech aus einem Werkstoff hergestellt ist, der wenigstens ein von der Gruppe bestehend aus Stahl, gehärteter Stahl oder hartes Kunststoffmaterial umfasst.

7. Rohrpaketzylinder nach einem der Ansprüche 1-6, **dadurch gekennzeichnet, dass** die durchgehende Achse mit wenigstens eine der Stirnplatten des Rohrpaketzylinders verbunden und dazu fixiert ist, und zwar mittels wenigstens eines Anschlussstücks, das Befestigungsmittel und Sicherungsmittel umfasst.

8. Rohrpaketzylinder nach Anspruch 7, **dadurch gekennzeichnet, dass** sowohl Sicherungsmittel als Befestigungsmittel eine Bolzensammlung aufweist.

## Revendications

1. Un rouleau packer à tubes (1) avec un arbre fixe et traversant (2) dans lequel au moins une plaque de racloir (5) est montée sur l'arbre fixe et traversant, la plaque de racloir ayant un côté extérieur (24) disposé dans la proximité immédiate des barres (10 - 23) du rouleau packer à tubes, **caractérisé en ce qu'**au moins une des disques d'extrémité (4) du rouleau packer à tubes associée à une ouverture centrale (30) est pourvue d'une coupe (31) ayant la forme d'une coupe en travers de la plaque de racloir, ladite ouverture et ladite coupe sont adaptées pour être passées par l'arbre traversant et la plaque de racloir.

2. Rouleau packer à tubes selon la revendication 1, **caractérisé en ce que** la forme de section de la plaque de racloir comprend au moins l'une des formes du groupe comprenant une forme plane, une forme concave, une forme convexe ou une forme de L.

3. Rouleau packer à tubes selon l'une quelconque des revendications 1 à 2, **caractérisé en ce que** la plaque de racloir est montée vers l'arrière par rapport au sens d'avance.

4. Rouleau packer à tubes selon l'une quelconque des revendications 1 à 3, **caractérisé en ce que** le rouleau packer à tubes est composé de modules, et que la longueur de la plaque de racloir est adaptée à la longueur d'une telle module.

5. Rouleau packer à tubes selon l'une quelconque des revendications 1 à 4, **caractérisé en ce que** la plaque de racloir peut être fixée à l'arbre traversant en appliquant l'une des méthodes du groupe comprenant la soudure, le boulonnage ou des raccords.

6. Rouleau packer à tubes selon l'une quelconque des revendications 1 à 5, **caractérisé en ce que** la plaque de racloir est fabriquée d'une matière comprenant au moins l'une des matières du groupe d'acier, d'acier durci ou d'une matière plastique dure.

7. Rouleau packer à tubes selon l'une quelconque des revendications 1 à 6, **caractérisé en ce que** l'arbre traversant est connecté et fixé à au moins l'une des disques d'extrémité du rouleau packer à tubes avec au moins un raccord comprenant des moyens de sécurité et des moyens de fixation.

8. Rouleau packer à tubes selon la revendication 7, **caractérisée en ce que** les moyens de sécurité et les moyens de fixation comprennent un assemblage boulonné.
